# EUROPÄISCHE PATENTANMELDUNG

(11) **EP 3 739 714 A1**
(43) Veröffentlichungstag der Anmeldung: **18.11.2020**
(21) Anmeldenummer: 19020333.1
(22) Anmeldetag: 16.05.2019
(51) Int. Cl.: H02J 3/38, H02J 3/14, C01B 3/02, F25J 3/06

(54) **VERFAHREN ZUM BETREIBEN EINER INDUSTRIEANLAGE UND ENTSPRECHENDE INDUSTRIEANLAGE**

(71) Anmelder: Linde GmbH, 82049 Pullach (DE)
(72) Erfinder: Alekseev, Alexander, 82515 Wolfratshausen (DE); Gärtner, Lars-Erik, Bridgewater, NJ 08807 (US); Rupieper, Andreas, 01328 Dresden (DE)
(74) Vertreter: Imhof, Dietmar

(57) **Zusammenfassung**

Die Erfindung betrifft ein Verfahren zum Betreiben einer Industrieanlage (100-400) mit einer ersten Gasversorgungseinrichtung (1), die Wasserstoff durch Elektrolyse von Wasser bereitstellt, mit einer oder mehreren zweiten Gasversorgungseinrichtungen (2, 3), die ein oder mehrere weitere Gase bereitstellt, mit einem oder mit mehreren Verbrauchern (4), der oder die den Wasserstoff und das oder die weiteren Gase zumindest zum Teil verbraucht oder verbrauchen, und mit einer Stromerzeugungseinrichtung (5), die elektrischen Strom aus erneuerbaren Energiequellen in einer über die Zeit schwankenden Strommenge erzeugt. Es ist vorgesehen, dass die Gasversorgungseinrichtungen (1, 2, 3) zu einer Gasversorgungseinheit (10) zusammengefasst sind, die mit mindestens 50% des elektrischen Stroms gespeist wird, wobei eine elektrische Leistungsaufnahme der gemeinsamen Gasversorgungseinheit (10) an die schwankende Strommenge angepasst wird. Eine entsprechend eingerichtete Industrieanlage (100-400) ist ebenfalls Gegenstand der vorliegenden Erfindung.

## Beschreibung

Die vorliegende Erfindung betrifft ein Verfahren zum Betreiben einer Industrieanlage und eine entsprechende Industrieanlage gemäß den jeweiligen Oberbegriffen der unabhängigen Patentansprüche.

### Stand der Technik

Elektrischer Strom, der mittels erneuerbarer Energiequellen und entsprechender Kraftanlagen (Renewable Energy Power Plants, REPP) für Industrieanlagen bereitgestellt wird (sogenannter grüner Strom), unterliegt natürlichen Fluktuationen. Eine kontinuierliche und stabile Stromversorgung im Sinne der temporalen, qualitativen und quantitativen Verfügbarkeit ist daher nicht immer zuverlässig gewährleistet. Dies gilt insbesondere für die üblicherweise als Kraftanlagen eingesetzten Windenergie- und Photovoltaikanlagen und entsprechende Kombinationen hiervon. Bei Einsatz entsprechender Kraftanlagen ist daher in der Regel keine Garantie für eine sichere, direkte Stromversorgung für den jeweiligen Abnehmer möglich.

Entsprechende Fluktuationen in der Versorgung mit grünem Strom sind insbesondere in Fällen von Nachteil, in denen eine Industrieanlage mit Wasserstoff in einer im Wesentlichen konstanten Menge versorgt und dieser Wasserstoff, wie an sich bekannt, soweit wie möglich unter Verwendung von grünem Strom bereitgestellt werden soll, insbesondere durch Wasserelektrolyse (sogenannter grüner Wasserstoff).

Allgemein wird hier mit "grünem" elektrischem Strom solcher elektrischer Strom bezeichnet, der unter Verwendung erneuerbarer Energiequellen, insbesondere Solarenergie, Windenergie oder Wasserkraft, bereitgestellt wird. Entsprechend wird elektrischer Strom, der unter Verwendung fossiler Energieträger oder Kernkraft bereitgestellt wird, als "schwarzer" elektrischer Strom bezeichnet. Nachfolgend werden die Begriffe "elektrische Energie" und "(elektrischer) Strom" synonym verwendet. Wasserstoff, der unter Verwendung von grünem Strom bereitgestellt wird, wird nachfolgend auch als "grüner" Wasserstoff bezeichnet.

Die im Rahmen der vorliegenden Erfindung zu lösende Aufgabe besteht vor diesem Hintergrund darin, verbesserte Maßnahmen zur Bewältigung von Stromfluktuationen bei der Verwendung von grünem Strom in entsprechenden, mit Wasserstoff versorgten Industrieanlagen bereitzustellen.

### Offenbarung der Erfindung

Vor diesem Hintergrund schlägt die vorliegende Erfindung ein Verfahren zum Betreiben einer Industrieanlage und eine entsprechende Industrieanlage mit den jeweiligen Merkmalen der unabhängigen Patentansprüche vor. Ausgestaltungen sind jeweils Gegenstand der abhängigen Patentansprüche sowie der nachfolgenden Beschreibung.

Die Grundidee der vorliegenden Erfindung besteht allgemein darin, eine Industrieanlage, die der Versorgung mit Wasserstoff bedarf, mit einer Einrichtung zur Versorgung mit grünem Wasserstoff auszustatten und diese Einrichtung dabei mit einer weiteren Gasversorgung für die Industrieanlage zu kombinieren. Auf diese Weise kann ein flexiblerer Betrieb erzielt werden, welcher die Einbindung der volatilen grünen elektrischen Energie in größerem Umfang erlaubt.

Nachfolgend werden, vor der Erläuterung der erfindungsgemäß vorgeschlagenen Maßnahmen und von deren Vorteilen, zunächst die der Erfindung zugrunde liegenden Probleme, klassische Lösungsansätze für diese Probleme sowie die Grundlagen der im Rahmen der vorliegenden Erfindung eingesetzten Verfahren erläutert. Ferner werden zur Beschreibung der Erfindung verwendete Begriffe definiert.

Wie erwähnt, betrifft die vorliegende Erfindung die Versorgung von Industrieanlagen mit Wasserstoff, so dass zunächst auf entsprechende Verfahren und Anlagen, insbesondere den Einsatz von grünem Strom in diesem Zusammenhang, Bezug genommen werden soll. Die vorliegende Erfindung kombiniert insbesondere eine Wasserstoffversorgung unter Verwendung von grünem Strom und eine kryogene Luftzerlegung und/oder eine Bereitstellung von Wasserstoff durch Reformierung. Daher wird nachfolgend auch zunächst auf entsprechende Verfahren Bezug genommen, und zwar insbesondere im Zusammenhang mit der Verwendung von grünem Strom.

Die vorliegende Erfindung eignet sich insbesondere für den Betrieb von chemischen Verbundanlagen, die einerseits mit Wasserstoff und dabei zumindest mindestens teilweise (in zeitlicher und mengenmäßiger Hinsicht) mit elektrischem Strom aus erneuerbaren Energiequellen versorgt werden. Eine derartige Verbundanlage wird nachfolgend allgemein als Industrieanlage bezeichnet und umfasst die nachfolgend jeweils im Detail erläuterten Komponenten. Der Anteil an grünem Wasserstoff unterschreitet dabei im Rahmen der vorliegenden Erfindung vorteilhafterweise 20% der gesamten bereitgestellten Wasserstoffmenge nicht. Der Anteil des grünen Wasserstoffs unterschreitet vorteilhafterweise insbesondere 30%, 40%, 50%, 60%, 70%, 80% oder 90% der gesamten Wasserstoffmenge nicht.

Wasserstoff kann bekanntermaßen entweder elektrolytisch aus Wasser oder durch Umsetzung von Kohlenwasserstoffen, beispielsweise durch Dampfreformierung, hergestellt werden. Wird Wasserstoff elektrolytisch aus Wasser hergestellt und für die Elektrolyse grüner Strom verwendet, wird hierfür auch der Begriff "grüner" Wasserstoff verwendet, wie bereits oben erwähnt. Auch zur Umsetzung von Kohlenwasserstoffen, beispielsweise durch Dampfreformierung, kann grundsätzlich grüner Strom, und zwar zur Bereitstellung von Heizleistung, verwendet werden. Der entsprechend erzeugte Wasserstoff ist kann damit ebenfalls teilweise "grün" erzeugt sein. Herkömmlicherweise werden entsprechende Reaktoren jedoch unter Verwendung von Brenngasen betrieben. Vollständig grüner Wasserstoff wird dagegen ohne direkte Emission von Kohlendioxid erzeugt und erscheint damit im Hinblick auf seine Klimabilanz besonders vorteilhaft.

Im Zuge der Umstellung auf alternative Energiequellen (sogenannte Energiewende) werden zunehmend große Wasserselektrolyseeinrichtungen mit einer Leistungsaufnahme von mehr als 20 MW an Industriestandorten bzw. in Industrieclustern installiert. Beispiele für Industriecluster, die einer Versorgung mit Wasserstoff bedürfen, und die von einer Versorgung mit grünem Wasserstoff in besonderer Weise profitieren, sind insbesondere Stahlwerke, Raffinerien, sogenannte Chemieparks bzw. Chemiestandorte und Kraftwerke. Wasserselektrolyseeinrichtungen dienen hier der Wasserstoffversorgung. Von besonderem Interesse ist dabei die Versorgung mit dem erwähnten grünem Wasserstoff.

Bei der Wasserelektrolyse wird bekanntermaßen Wasser zu Wasserstoff und Sauerstoff zerlegt, wobei aus zwei Wassermolekülen zwei Wasserstoffmoleküle und ein Sauerstoffmolekül erzeugt werden. Eine Wasserselektrolyseeinrichtung für eine Wasserstoffproduktion von 10.000 Nm3/h (Normkubikmeter pro Stunde) erzeugt daher mit ca. 30 MW elektrischer Leistung auch 5.000 Nm3/h Sauerstoff.

Nachteile bei der Verwendung von grünem Strom zur Herstellung von Wasserstoff ergeben sich, wie erwähnt, daraus, dass entsprechender grüner Strom nicht in ausreichend konstanter Menge zur Verfügung steht.

Eine häufig angewandte technische Lösung zur Handhabung dieser Fluktuationen in der Verfügbarkeit von grünem Strom besteht in der Verwendung größerer Stromnetzwerke, die auch von grundlastfähigen Kraftanlagen aus z.B. fossilen Energieträgern versorgt werden. Solche Kraftanlagen unterliegen den genannten Fluktuationen nicht. Eine entsprechende Einbindung hat jedoch zur Folge, dass auf diese Weise grüner Strom mit schwarzem Strom vermischt wird. Ferner sind in solchen Fällen nicht unerhebliche Netzdurchleitungsgebühren zu entrichten. Diese zusätzlichen Kosten führen zu höheren gesamten Stromkosten für den grünen Strom, so dass dessen Verwendung wirtschaftlich unattraktiv oder problematisch wird.

Eine Alternative zur Vermeidung der "Vermischung" von grünem und schwarzem Strom besteht in der Bereitstellung eines Stromspeichers. Allerdings sind auch geeignete großskalige Stromspeicher (z.B. Hydrospeicher, Druckluftspeicher) kapazitiv limitiert, so dass chemische Speicher zunehmend an Bedeutung gewinnen. Hierbei lassen sich insbesondere zwei alternative Herangehensweisen unterscheiden, die grundsätzlich, wie im Rahmen der vorliegenden Erfindung erkannt wurde, auch im Zusammenhang mit der Bereitstellung von grünem Wasserstoff in entsprechenden Industrieanlagen verwendet werden können.

Einerseits kann bei großem Stromangebot unter Einsatz eines energieverbrauchenden Prozesses ein chemischer Stoff oder ein bestimmtes Medium in größerer Menge bereitgestellt werden als in Zeiträumen eines geringeren Stromangebots. Ein konstanter Bedarf an dem Stoff oder dem Medium kann dabei in den Zeiträumen geringeren Stromangebots zumindest teilweise aus einem Speicher gedeckt werden, der bei dem großen Stromangebot aufgefüllt wird. Andererseits kann auch bei großem Stromangebot unter Einsatz eines entsprechenden, elektrische Energie verbrauchenden Prozesses ein chemischer Stoff oder ein bestimmtes Medium bereitgestellt werden, welches bei geringem Stromangebot in einem weiteren Prozess unter Erzeugung von elektrischer Energie erneut umgewandelt werden kann.

Ein bekanntes Verfahren zur Stromspeicherung in Form der soeben erläuterten ersten Alternative umfasst beispielsweise, bei großem Stromangebot auch eine möglichst große Menge flüssiger und/oder gasförmiger Luftprodukte in einer Luftzerlegungseinrichtung herzustellen und in geeigneter Weise zu speichern. Bei geringem Stromangebot kann die Luftzerlegungseinrichtung dann unterhalb ihrer Nennkapazität betrieben werden, wobei die Versorgung von Verbrauchern teilweise unter Verwendung der zuvor gespeicherten Luftprodukte erfolgt.

Da Stromtarife und Angebotsmengen sich jedoch typischerweise mit hoher Dynamik ändern, ist in allen Fällen, in denen eine entsprechende Betriebsweise erfolgen soll, eine entsprechende hochdynamische Änderung der Produktionskapazitäten bzw. ein rascher Lastwechsel wünschenswert. Im realen Betrieb ist jedoch beispielsweise die Laständerungsgeschwindigkeit einer Luftzerlegungseinrichtung durch die Trägheit der Rektifiziervorgänge in den Trennkolonnen limitiert. Auch ein entsprechender Betrieb einer Luftzerlegungseinrichtung alleine stellt daher nicht notwendigerweise ein ausreichendes Mittel dar, um die genannten Fluktuationen abzupuffern. Eine Luftzerlegungseinrichtung kann jedoch mit Vorteil in einer Ausgestaltung der vorliegenden Erfindung eingesetzt werden, wie nachfolgend noch im Detail erläutert.

Ein wesentlicher Vorteil der Kombination einer kryogenen Luftzerlegung und der Wasserelektrolyse besteht, wie erfindungsgemäß erkannt wurde, darin, dass in der Luftzerlegung der Elektrolysesauerstoff aus der Wasserelektrolyse genutzt werden kann. Wirtschaftlich ergibt es Sinn, das Nebenprodukt Sauerstoff zu verwerten, speziell an Standorten mit Sauerstoffbedarf. Die Qualität des Elektrolysesauerstoffs ist in der Regel aber abhängig vom Grad der Kontamination mit Wasserdampf. Es können jedoch auch weitere Verunreinigungen mit Wasserstoff oder Luft (also insbesondere Stickstoff bzw. anderen Luftkomponenten) auftreten.

In einer möglichen technischen Lösung kann dabei der Elektrolysesauerstoff der Einsatzluft für die Luftzerlegung stromauf des Hauptluftverdichters beigemischt werden. Im Hauptluftverdichter wird die auf dieser Weise mit Sauerstoff angereicherte Luft verdichtet, danach in der Trocknungs- und Reinigungseinheit getrocknet, von Verunreinigungen befreit und weiter wie konventionelle Luft zerlegt. Der Vorteil dieses Verfahrens wird darin gesehen, dass praktisch keine Änderungen an der Luftzerlegungseinrichtung und geringe Investitionskosten erforderlich sind.

Ein entsprechendes Verfahren umfasst also, Wasser unter Erhalt eines wasserstoffreichen und eines sauerstoffreichen Elektrolyseprodukts einer Elektrolyse zu unterwerfen und das sauerstoffreiche Elektrolyseprodukt einer kryogenen Luftzerlegung zu unterwerfen, wobei das sauerstoffreiche Elektrolyseprodukt vorteilhafterweise einer Verdichtung unterworfen wird, welcher insbesondere auch der Luftzerlegung unterworfene Einsatzluft zugeführt wird. Insbesondere kann das sauerstoffreiche Elektrolyseprodukt, vorteilhafterweise zusammen mit der Einsatzluft, einer Trocknung und ggf. Kohlendioxidentfernung unterworfen werden.

Vergleicht man die Energieeffizienz der Sauerstofferzeugung eines entsprechenden Kombinationsverfahrens aus kryogener Luftzerlegung und Wasserelektrolyse jedoch mit der konventionellen Luftzerlegung, so zeigt das Kombinationsverfahren eine geringere Energieeffizienz. Der aufwendig durch Elektrolyse erzeugte Sauerstoff wird in einem entsprechenden Kombinationsverfahren mit angesaugter Umgebungsluft vermischt, wobei der für die Erzeugung des Sauerstoffs bei der Elektrolyse investierte Energieaufwand fast vollständig verlorengeht. Die vorliegende Erfindung bildet ein entsprechendes Verfahren daher weiter.

Herkömmliche Verfahren zur Herstellung von Wasserstoff umfassen beispielsweise die Dampfreformierung, wie sie aus dem Stand der Technik hinlänglich bekannt ist und daher hier nicht zusätzlich erläutert wird. Einer Dampfreformierung wird insbesondere ein kohlenwasserstoffreiches Einsatzgas zugeführt und die Dampfreformierung wird typischerweise in einem mit Erdgas befeuerten Reaktor vorgenommen. Im Rahmen der vorliegenden Erfindung kann eine Dampfreformierung aber auch unter Verwendung von elektrischem Strom mit Heizleistung versorgt werden, so dass auch entsprechend hergestellter Wasserstoff teilweise als "grün" bezeichnet werden kann, wie erwähnt.

Die Stromerzeugungseinrichtung, die im Rahmen der vorliegenden Erfindung zum Einsatz kommt, ist zur Erzeugung von elektrischem Strom aus erneuerbaren Energiequellen, also von sogenanntem grünem Strom, eingerichtet. Die Versorgung mit elektrischem Strom ist im Rahmen der vorliegenden Erfindung insbesondere netzunabhängig. Unter einer Netzunabhängigkeit wird dabei verstanden, dass die entsprechende Stromerzeugungseinrichtung autonom betrieben werden kann und der in der Stromerzeugungseinrichtung erzeugte grüne Strom nicht in ein übergeordnetes elektrisches Stromnetz eingespeist wird bzw. zumindest regelmäßig keine entsprechende Einspeisung vorgesehen ist. Auf diese Weise können Netzdurchleitungsgebühren entfallen und die Stromkosten auf der Verbraucherseite können reduziert werden. Ein wesentlicher Aspekt der vorliegenden Erfindung ist damit der, dass die vorgeschlagene Industrieanlage nicht an ein übergeordnetes Stromnetz angebunden ist, sondern autark oder im Wesentlichen autark, d.h. zu wenigstens 80% oder 90% von der Energieerzeugungseinrichtung versorgt wird.

### Merkmale und Vorteile der Erfindung

Insgesamt schlägt die vorliegende Erfindung ein Verfahren zum Betreiben einer Industrieanlage mit einer ersten Gasversorgungseinrichtung, die Wasserstoff durch Elektrolyse von Wasser bereitstellt, mit einer oder mehreren zweiten Gasversorgungseinrichtungen, die ein oder mehrere weitere Gase bereitstellt oder bereitstellen, mit einem oder mehreren Verbrauchern, der oder die der den Wasserstoff und das oder die weiteren Gase zumindest zum Teil verbraucht oder verbrauchen, und mit einer Stromerzeugungseinrichtung, die elektrischen Strom aus einer oder aus mehreren erneuerbaren Energiequellen in einer über die Zeit schwankenden Strom menge erzeugt, vor. Die erste Gasversorgungseinrichtung ist dabei als Elektrolyseeinrichtung für Wasser eingerichtet und wird unter Verwendung von elektrischem Strom betrieben, wie zuvor bereits erläutert. Entsprechende Elektrolyseverfahren und hierfür verwendete Elektrolyseeinrichtungen sind aus dem Stand der Technik bekannt.

Die erste Gasversorgungseinrichtung und die eine oder die mehreren zweiten Gasversorgungseinrichtungen sind erfindungsgemäß zu einer gemeinsamen Gasversorgungseinheit zusammengefasst, die mit zumindest einem Teil des elektrischen Stroms, der in der Stromerzeugungseinrichtung erzeugt wird, gespeist wird. Der in der Stromerzeugungseinrichtung erzeugte Strom wird dabei insbesondere der ersten Gasversorgungseinrichtung zugeführt.

Ein wesentliches Merkmal der vorliegenden Erfindung ist, dass eine elektrische Leistungsaufnahme der gemeinsamen Gasversorgungseinheit, die die erste und die eine oder die mehreren zweiten Gasversorgungseinrichtungen umfasst, derart an die schwankende Strommenge angepasst wird, dass zu jedem Zeitpunkt wenigstens 50%, insbesondere wenigstens 66% oder wenigstens 75% der Strommenge oder die gesamte Strommenge, die in der Stromerzeugungseinrichtung regenerativ erzeugt wird, in der gemeinsamen Gasversorgungseinheit verbraucht wird. Durch eine entsprechende Verbrauchsanpassung kann die vorliegende Erfindung die zuvor erläuterten Vorteile der Netzautarkie erzielen, die insbesondere in einer Reduzierung von Durchleitungskosten und der nicht erfolgenden Vermischung von grünem Strom und nicht regenerativ erzeugtem Strom liegt. Durch einen vollständigen oder im Wesentlichen vollständigen Verbrauch des regenerativ erzeugten Stroms ist keine Einspeisung in ein Stromnetz, verbunden mit entsprechenden Gebühren, verbunden.

Eine entsprechende Anpassung der Leistungsaufnahme kann jedoch umgekehrt auch derart erfolgen, dass die Leistungsaufnahme der gemeinsamen Gasversorgungseinheit jederzeit an das Angebot an grünem Strom angepasst werden kann und eine möglichst geringe Menge zusätzlichen schwarzen Stroms verbraucht wird. Insgesamt erfolgt eine entsprechende Anpassung daher vorteilhafterweise derart, dass zu jedem Zeitpunkt eine Gesamtstrommenge, die in der gemeinsamen Gasversorgungseinheit verbraucht wird, zu wenigstens 50%, 66%, 75% oder vollständig regenerativ erzeugten Strom aus der Stromerzeugungseinrichtung umfasst.

Die Erfindung ermöglicht diese Anpassung insbesondere in einer Anordnung, bei der die Leistungsaufnahme der gemeinsamen Gasversorgungseinheit durch eine Leistungsregelung und/oder durch Zu- und Abschalten der zweiten oder wenigstens einer der mehreren zweiten Gasversorgungseinrichtungen an die schwankende Strommenge angepasst wird. Eine zweite Gasversorgungseinrichtung, die auf diese Weise zu- oder abgeschaltet werden kann, kann insbesondere als kryogene Luftzerlegungseinrichtung und/oder Reformierungseinrichtung ausgebildet sein, wobei die Reformierungseinrichtung insbesondere zur Durchführung eines Dampfreformierungsverfahrens ausgebildet sein kann. Durch die Verwendung einer Luftzerlegungseinrichtung kann dabei insbesondere auch der Elektrolysesauerstoff der Wasserelektrolyse genutzt werden. Es ist ferner eine Versorgung mit weiteren Gasen wie Sauerstoff möglich. Die Verwendung einer Reformierungseinrichtung erlaubt die Bereitstellung von Wasserstoff auch für Fälle, in denen der grüne Strom zur Deckung des Wasserstoffbedarfs nicht ausreicht.

Vorteilhafterweise sind in einer entsprechenden Industrieanlage sowohl eine Luftzerlegungseinrichtung als zweite Gasversorgungseinrichtung als auch eine weitere zweite Gasversorgungseinrichtung, die unter Einsatz eines kohlenwasserstoffreichen Gases Wasserstoff nichtelektrolytisch bereitstellt, vorgesehen.

Wie erwähnt, kann als die Gasversorgungseinrichtung, die unter Einsatz des kohlenwasserstoffreichen Gases Wasserstoff nichtelektrolytisch bereitstellt, eine Reformiereinrichtung sein. In einer derartigen Ausgestaltung wird also insbesondere vorgeschlagen, eine Luftzerlegungseinrichtung und eine Reformiereinrichtung zusätzlich zu einer Wasserelektrolyseeinrichtung bereitzustellen.

Insbesondere umfasst die Industrieanlage in dieser Ausgestaltung auch wenigstens zwei Speicher, nämlich insbesondere für Wasserstoff und Sauerstoff. Bei der Luftzerlegungseinrichtung handelt es sich insbesondere um eine schnell verstellbare Luftzerlegungseinrichtung, d.h. um eine Luftzerlegungseinrichtung, die mit einer Laständerungsgeschwindigkeit von mehr als 0,2% pro Minute betrieben werden kann. Auf diese Weise kann eine Produktionsmenge hier rasch an das zur Verfügung stehende Stromangebot angepasst werden.

In einer erfindungsgemäß betriebenen Industrieanlage kann der in der ersten Gasversorgungseinrichtung elektrolytisch erzeugte Wasserstoff dem wenigstens einen Verbraucher zugeführt werden. Der ebenfalls erzeugte, elektrolytisch bereitgestellte Sauerstoff kann insbesondere vorgetrocknet, in die Luftzerlegungseinrichtung geleitet und dort weiter konditioniert werden. Eine derartige Konditionierung umfasst im Rahmen der vorliegenden Erfindung insbesondere eine Verflüssigung, Reinigung, Verdichtung usw. Ein entsprechendes Luftzerlegungsverfahren kann dabei zur Verwendung von Elektrolysesauerstoff modifiziert werden.

Im Rahmen der vorliegenden Erfindung wird die erste Gasversorgungseinrichtung, also die Wasserelektrolyseeinrichtung, grundsätzlich mit regenerativ erzeugtem Strom versorgt. Die Luftzerlegungseinrichtung kann nach Möglichkeit ebenfalls mit regenerativ erzeugtem Strom versorgt werden. Beide Anlagenkomponenten, also die erste Gasversorgungseinrichtung in Form der Wasserelektrolyseeinrichtung und die Luftzerlegungseinrichtung können jedoch für Notfälle auch mit fossil erzeugtem Strom versorgt werden, der aber für die Elektrolyse 10% nicht überschreiten sollte.

Der Betrieb einer entsprechenden kombinierten Anlage aus Wasserelektrolyseeinrichtung und Luftzerlegungseinrichtung mit einem zugehörigen weiteren Verfahren zur Bereitstellung von Wasserstoff in nichtelektrolytischer Weise umfasst vorteilhafterweise wenigstens zwei Betriebsmodi. In einem ersten Betriebsmodus erfolgt eine Maximaleinbindung von regenerativ erzeugtem Strom. Die Wasserelektrolyseeinrichtung, also die erste Gasversorgungseinrichtung, wird in diesem Fall unter maximaler Last betrieben, insbesondere deren Kompressoren. Der grüne Wasserstoff wird in diesem Fall maximal genutzt und der Einsatz von fossil erzeugtem Wasserstoff, also Wasserstoff, der in der Gasversorgungseinrichtung, die unter Einsatz eines kohlenwasserstoffreichen Gases Wasserstoff nichtelektrolytisch bereitstellt, kann minimiert werden.

Auf diese Weise werden in dem ersten Betriebsmodus die direkten Kohlendioxidemissionen der Gesamtanlage minimiert. Der Überschuss an grünem Wasserstoff, falls vorhanden, kann in diesem Fall in einem Speicher flüssig oder in verdichteter Form gespeichert werden. Die maximale Menge an elektrolytisch erzeugtem Sauerstoff aus der ersten Gasversorgungseinrichtung kann in der Luftzerlegungseinrichtung über eine Trocknungseinheit geleitet, verdichtet und/oder verflüssigt werden. Ein entsprechend verflüssigtes Produkt kann an einen Verbraucher bereitgestellt werden. Flüssigsauerstoff kann in geeigneter Weise bis zur Verwendung einem Flüssigsauerstoffspeicher gespeichert werden.

Eine Anordnung gemäß einer besonders bevorzugten Ausgestaltung der vorliegenden Erfindung kann allgemein einen Wasserstoffverflüssiger umfassen, um einen entsprechenden Betrieb gewährleisten zu können.

In einem zweiten Betriebsmodus erfolgt eine Minimaleinbindung regenerativ erzeugten Stroms, also von grünem Strom. In diesem Fall wird die erste Gasversorgungseinrichtung, also die Wasserelektrolyseeinrichtung, vorteilhafterweise unter Minimallast betrieben, ebenso die Luftzerlegungseinrichtung. Die Produktion des grünen Wasserstoffs wird durch Wasserstoff aus dem Speicher unterstützt, der in diesem in dem ersten Betriebsmodus gespeichert wurde. Auch hierdurch kann der Einsatz von fossil erzeugtem Wasserstoff, beispielsweise aus Methan, minimiert werden. Insgesamt werden auch hierbei die fossilen, direkten Kohlendioxidemissionen entsprechend minimiert. Die Sauerstoffproduktion wird mit elektrolytisch erzeugtem Sauerstoff, der zwischengespeichert wurde, unterstützt.

Insgesamt kann im Rahmen der vorliegenden Erfindung mittels der ersten Gasversorgungseinrichtung und der Gasversorgungseinrichtung, die unter Einsatz des kohlenwasserstoffreichen Gases Wasserstoff nichtelektrolytisch bereitstellt, eine Gesamtmenge an Wasserstoff bereitgestellt werden, zu der die erste Gasversorgungseinrichtung und die Gasversorgungseinrichtung, die unter Einsatz des kohlenwasserstoffreichen Gases Wasserstoff nichtelektrolytisch bereitstellt, je nach der vorhandenen Strommenge aus einer regenerativen Energiequelle unterschiedliche Beiträge leisten. Insbesondere wird der Beitrag der ersten Gasversorgungseinrichtung zu der Gesamtmenge gegenüber dem Beitrag der Gasversorgungseinrichtung, die unter Einsatz des kohlenwasserstoffreichen Gases Wasserstoff nichtelektrolytisch bereitstellt, bei einer größeren verfügbaren Strommenge erhöht und bei einer geringeren verfügbaren Strommenge verringert.

Entsprechend wird eine Produktionsmenge der Luftzerlegungseinrichtung bei einer größeren verfügbaren Strommenge vergrößert und bei einer geringeren verfügbaren Strommenge verringert. Details hierzu wurden jeweils zuvor bereits erläutert. Die geringere verfügbare Strommenge kann insbesondere bei 50% bis 90% der größeren verfügbaren Strommenge liegen, wobei sich die verfügbare Strommenge insbesondere um mehr als 1 % pro Minute ändern kann.

Gemäß einer besonders bevorzugten Ausgestaltung der vorliegenden Erfindung kann ferner eine Wasserstoffverflüssigungs- und Speichereinrichtung zum Verflüssigen und flüssigem Speichern von Wasserstoff in einer entsprechenden Industrieanlage eingesetzt werden. Der Betrieb einer entsprechenden kombinierten Anlage aus einer ersten Gasversorgungseinrichtung in Form einer Elektrolyseanlage, einer Luftzerlegungseinrichtung und einer Wasserstoffverflüssigungseinrichtung umfasst in dieser Ausgestaltung vorteilhafterweise ebenfalls zwei Betriebsmodi, wobei sich diese Betriebsmodi insofern von den zuvor erläuterten zwei Betriebsmodi unterscheiden, als die Verflüssigung des grünen Wasserstoffs, falls dieser im Überschuss vorhanden ist, ebenfalls unter Verwendung von grünem Strom durchgeführt wird.

In diesem Zusammenhang kann ferner auch ein Kältespeicher zur Verflüssigung von Wasserstoff genutzt werden. Umgekehrt kann in dem ersten Betriebsmodus entsprechender Wasserstoff unter Verwendung einer entsprechenden Kältespeichereinrichtung verdampft werden. Eine entsprechende Kältespeichereinrichtung kann daher ebenfalls Teil der vorliegenden Erfindung sein. Es eignen sich insbesondere Festbettkältespeicher nach Art bekannter Regeneratoren konventioneller Luftzerlegungseinrichtungen zum Einsatz in der vorliegenden Erfindung. Ein entsprechender Festbettkältespeicher kann insbesondere ein Kältespeichermaterial in Form einer Steinschüttung oder in Form von Beton aufweisen.

In einer weiteren vorteilhaften Ausgestaltung der vorliegenden Erfindung können insbesondere auch eine Ammoniakerzeugungseinrichtung und/oder eine Methanolerzeugungseinrichtung in einem entsprechenden Verfahren verwendet werden. Der zur Erzeugung von Ammoniak benötigte Stickstoff kann dabei direkt in Form von Luft bereitgestellt oder in Form von Stickstoff aus der Luftzerlegungseinrichtung eingesetzt werden. Die Erzeugung von Ammoniak oder Methanol erfolgt dabei insbesondere in dem ersten Betriebsmodus, d.h. dann, wenn entsprechend große Mengen an grüner elektrischer Energie vorliegen.

In sämtlichen Ausgestaltungen der vorliegenden Erfindung kann eine Dampfreformierungseinrichtung, falls diese zu einer Hybridreformierung eingerichtet ist, auch teilweise mit grün erzeugtem Strom beheizt werden. Generell können alle erforderlichen Heizungen bzw. Wärmeerzeugungseinrichtungen auf elektrische Heizer umgestellt werden, falls dies im Sinne einer Energieeinsparung erforderlich bzw. technisch möglich und vorteilhaft ist.

Die vorliegende Erfindung erstreckt sich auch auf eine Industrieanlage mit einer ersten Gasversorgungseinrichtung, die zur Bereitstellung von Wasserstoff durch Elektrolyse von Wasser eingerichtet ist, mit einer oder mit mehreren zweiten Gasversorgungseinrichtungen, die zur Bereitstellung eines oder mehrerer weiterer Gase eingerichtet ist oder sind, mit einem oder mehreren Verbrauchern, der oder die zumindest teilweise zum Verbrauchen des Wasserstoffs des oder der weiteren Gase eingerichtet ist oder sind, und mit einer Stromerzeugungseinrichtung, die zur Erzeugung von elektrischem Strom aus einer oder mehreren erneuerbaren Energiequellen in einer über die zeitschwankenden Strommenge eingerichtet ist.

Erfindungsgemäß sind die erste Gasversorgungseinrichtung und die eine oder die mehreren zweiten Gasversorgungseinrichtungen zu einer zweiten Gasversorgungseinheit zusammengefasst, die mit zumindest einen Teil des Stroms speisbar ist. Die Industrieanlage ist erfindungsgemäß ferner dafür eingerichtet, eine elektrische Leistungsaufnahme der gemeinsamen Gasversorgungseinheit derart an die schwankende Strommenge anzupassen, dass zu jedem Zeitpunkt wenigstens 50% der Strommenge in der Gasversorgungseinheit verbraucht wird.

Zu weiteren Merkmalen und Vorteilen der erfindungsgemäß vorgesehenen Industrieanlage sei auf die obigen zu dem erfindungsgemäßen Verfahren und seinen Varianten erläuterten Merkmalen und Vorteilen ausdrücklich verwiesen. Dies gilt auch für eine Industrieanlage gemäß einer besonders bevorzugten Ausgestaltung der vorliegenden Erfindung, die zur Durchführung eines Verfahrens ausgestaltet ist, wie es zuvor erläutert wurde, bzw. einer entsprechenden Ausgestaltung hiervon.

Die Erfindung wird nachfolgend unter Bezugnahme auf die beigefügten Zeichnungen gegenüber dem Stand der Technik weiter erläutert.

### Kurze Beschreibung der Zeichnungen

In Figur 1 ist eine Industrieanlage gemäß einer nicht erfindungsgemäßen Ausgestaltung in vereinfachter Darstellung veranschaulicht.
In Figur 2 ist eine Industrieanlage gemäß einer Ausgestaltung der Erfindung in vereinfachter Darstellung veranschaulicht.
In Figur 3A ist eine Industrieanlage gemäß einer Ausgestaltung der Erfindung in einem ersten Betriebsmodus in vereinfachter Darstellung veranschaulicht.
In Figur 3B ist die in Figur 3A veranschaulichte Industrieanlage in einem zweiten Betriebsmodus veranschaulicht.
In Figur 4A ist eine Industrieanlage gemäß einer Ausgestaltung der Erfindung in einem ersten Betriebsmodus in vereinfachter Darstellung veranschaulicht.
In Figur 4B ist die in Figur 4A veranschaulichte Industrieanlage in einem zweiten Betriebsmodus veranschaulicht.
In Figur 5 ist eine Industrieanlage gemäß einer Ausgestaltung der vorliegenden Erfindung in vereinfachter Darstellung veranschaulicht.

In den Figuren sind einander funktional bzw. baulich entsprechende Komponenten mit identischen Bezugszeichen angegeben und werden lediglich der Übersichtlichkeit halber nicht wiederholt erläutert.

### Ausführliche Beschreibung der Zeichnungen

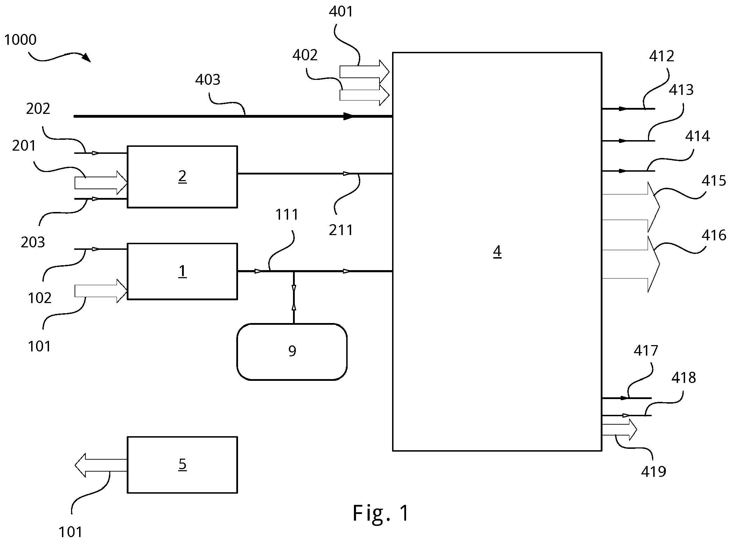

In Figur 1 ist eine Industrieanlage gemäß dem Stand der Technik in vereinfachter, schematischer Darstellung veranschaulicht und insgesamt mit 1000 bezeichnet. Die Industrieanlage 1000 umfasst eine erste Gasversorgungseinheit 1, die Wasserstoff durch Elektrolyse von Wasser bereitstellt.

Der ersten Gasversorgungseinrichtung 1 wird, wie mit 101 veranschaulicht, elektrischer Strom zugeführt, der aus einer regenerativen Energiequelle unter Einsatz einer Stromversorgungseinrichtung 5 gewonnen wird. Der ersten Gasversorgungseinrichtung 1 wird ein Wasserstrom 102 zugeführt. Ein mit der ersten Gasversorgungseinrichtung 1 bereitgestellter Wasserstoffstrom ist mit 111 angegeben.

Die Industrieanlage 1000 weist ferner eine zweite Gasversorgungseinrichtung auf, die hier mit 2 angegeben ist. Der zweiten Gasversorgungseinrichtung 2 wird im dargestellten Beispiel elektrischer Strom 201 zugeführt, der beispielsweise unter Verwendung eines fossilen Energieträgers in einer nicht dargestellten weiteren Energieerzeugungseinrichtung gewonnen oder einem Netz entnommen wird. Luft wird in Form eines Stoffstroms 202 und ein Kohlenwasserstoffstrom in Form eines Stoffstroms 203 zugeführt. Einer oder mehrere Gasströme, die mittels der zweiten Gasversorgungseinrichtung 2 bereitgestellt werden, sind mit 211 bezeichnet.

In der Industrieanlage 1000 ist ferner ein Verbraucher 4 vorgesehen, bei dem es sich beispielsweise um eine Stahlerzeugungsanlage, einen Chemiekomplex oder eine Raffinerie bzw. eine Kraftwerk handeln kann. Es können auch mehrere Verbraucher 4 vorgesehen sein. In dem Verbraucher 4 werden der Wasserstoff des Stoffstrom 111 und das oder die Gase des Stoffstroms 211 verbraucht. Dem Verbraucher 4 wird ferner elektrische Leistung, wie hier mit 401 angegeben, Wärme, wie mit 402 veranschaulicht, und ein Einsatzstrom 403, im Falle einer Raffinerie beispielsweise Rohöl, zugeführt.

Produkte des Verbrauchers 4 sind in Form der Stoffströme 412, 413 und 414 veranschaulicht, optional erzeugte Leistung ist mit 415 angegeben und optional erzeugte Wärme mit 416. Aus dem Verbraucher 4 können ferner Restgase bzw. Reststoffe 417 bzw. Kohlendioxid 418 und Abwärme 419 ausgeführt werden.

In der Industrieanlage 1000 ist ferner ein Druckspeicher 9 vorgesehen, der zur Ein- und Ausspeicherung von Wasserstoff des Stoffstroms 111 eingerichtet sein kann, falls dieser je nach Stromangebot in größerer oder geringerer Menge bereitgestellt wird, als er in dem Verbraucher 4 benötigt wird.

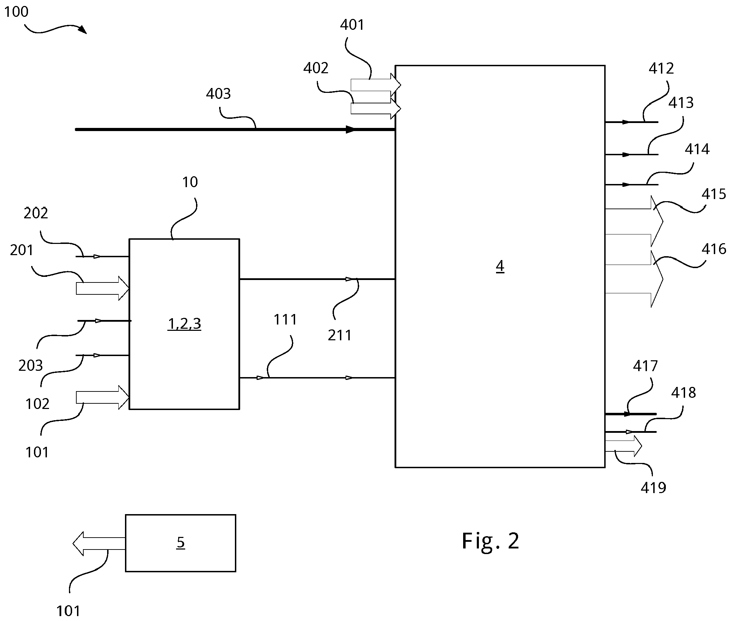

In Figur 2 ist eine Industrieanlage gemäß einer Ausgestaltung der vorliegenden Erfindung in stark vereinfachter schematischer Darstellung veranschaulicht und insgesamt mit 100 bezeichnet. Die Industrieanlage 100 unterscheidet sich dabei im Wesentlichen dadurch von der in Figur 1 veranschaulichten, nicht erfindungsgemäßen Industrieanlage 1000, dass die erste Gasversorgungseinrichtung 1 mit wenigstens einer zweiten Gasversorgungseinrichtung 2, 3 in einer gemeinsamen Gasversorgungseinheit 10 zusammengefasst ist.

Die gemeinsame Gasversorgungseinheit 10 insgesamt wird grüner elektrischer Strom zugeführt, der aus der regenerativen Energiequelle unter Einsatz der Stromversorgungseinrichtung 5 gewonnen wird und wie zuvor mit 101 bezeichnet ist. Ein Wasserstrom ist wie zuvor mit 102 angegeben. Die zuvor der getrennten zweiten Gasversorgungseinrichtung 2 zugeführte elektrische Energie bzw. entsprechende Medien, die nun der gemeinsamen Gasversorgungseinheit 10 zugeführt werden, sind wie zuvor mit 201 bis 203 angegeben. Entsprechendes gilt auch für die Gase in Form der Stoffströme 111 bzw. 211.

Die elektrische Leistungsaufnahme der gemeinsamen Gasversorgungseinheit 10 wird dabei derart an die schwankende Strommenge angepasst, die durch die Stromerzeugungseinrichtung 5 bereitgestellt wird, das zu jedem Zeitpunkt wenigstens 50% der Strommenge in der Gasversorgungseinheit 10 verbraucht wird. Zu weiteren Merkmalen der Anlage 100 sei auf die obigen Erläuterungen verwiesen.

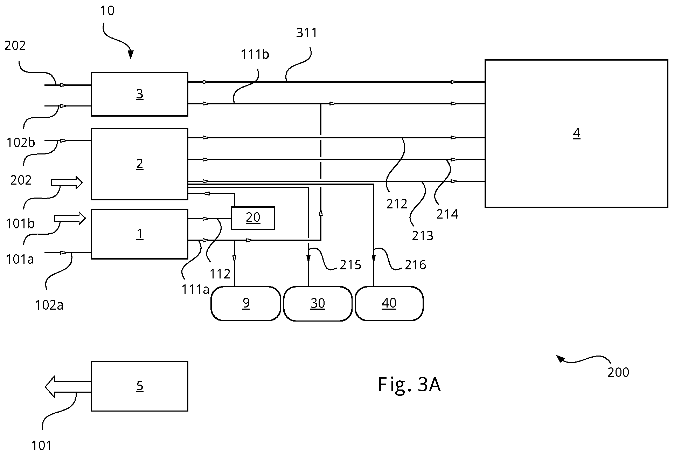

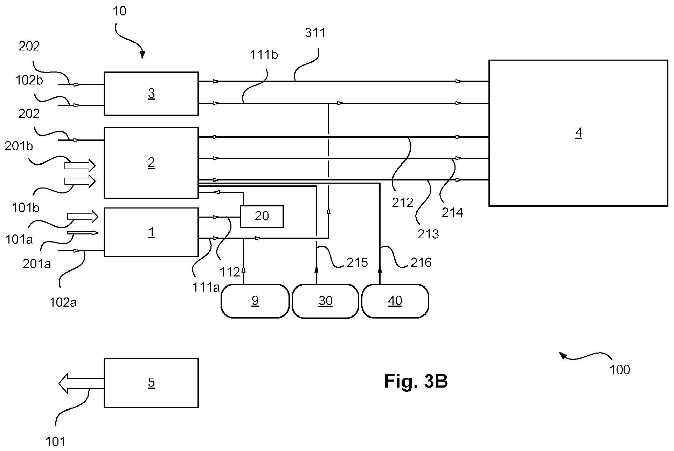

In Figur 3A ist eine Industrieanlage gemäß einer weiteren Ausgestaltung der vorliegenden Erfindung in einem ersten Betriebsmodus schematisch veranschaulicht und insgesamt mit 200 bezeichnet. Die gleiche Anlage 200 ist in Figur 3B ebenfalls mit 200 bezeichnet und dort in einem zweiten Betriebsmodus dargestellt.

Der erste Betriebsmodus gemäß Figur 3A entspricht insbesondere einem Betriebsmodus, in dem eine vergleichsweise große Menge an durch regenerative Energiequellen erzeugtem elektrischem Strom zur Verfügung steht, wohingegen in dem zweiten Betriebsmodus gemäß Figur 3B dieser Strom in geringerer Menge bereitsteht.

Erneut ist hier eine erste Gasversorgungseinrichtung 1 in Form einer Wasserelektrolyseeinrichtung bereitgestellt. Eine zweite Gasversorgungseinrichtung in Form einer Luftzerlegungseinrichtung ist mit 2 bezeichnet, eine weitere Gasversorgungseinrichtung, die im dargestellten Beispiel in Form einer Dampfreformierungseinrichtung ausgebildet ist, ist mit 3 angegeben.

Der ersten Gasversorgungseinrichtung 1, also der Wasserelektrolyseeinrichtung und der zweiten Gasversorgungseinrichtung 2, also der Luftzerlegungseinrichtung, in dem ersten Betriebsmodus zugeführter grüner elektrischer Strom, der wie zuvor bereitgestellt wird, ist mit 101a und 101b angegeben. In dem ersten Betriebsmodus gemäß Figur 3A ist dabei die Leistungsaufnahme jeweils maximal, so dass die erste Gasversorgungseinrichtung 1 und die zweite Gasversorgungseinrichtung 2 mit maximaler Leistung betrieben werden und daher die Stromnutzung maximal ist.

Ein der ersten Gasversorgungseinrichtung 1 zugeführter Wasserstrom ist mit 102a bezeichnet, ein der weiteren Gasversorgungseinrichtung 3 zugeführter Wasserstrom mit 102b. Der zweiten Gasversorgungseinrichtung 2, also der Luftzerlegungseinrichtung, zugeführte Luft ist mit 202 angegeben. Der weiteren Gasversorgungseinrichtung 3 wird ein wie zuvor mit 203 bezeichneter Kohlenwasserstoffstrom zugeführt.

In der ersten Gasversorgungseinrichtung 1 und in der weiteren Gasversorgungseinrichtung 103 werden jeweils Wasserstoffströme 111a und 111b gebildet. In der ersten Gasversorgungseinrichtung 1 wird ferner ein Sauerstoffstrom 112 gebildet. Der Wasserstoffstrom 111a kann dabei zumindest teilweise einer Speichereinrichtung 9 wie zuvor zugeführt werden. Der Wasserstoff kann dem Verbraucher 4 zugeführt und dabei dem Wasserstoffstrom 111b aus der weiteren Gasversorgungseinrichtung 3 vereinigt werden.

Der Sauerstoffstrom 112 aus der ersten Gasversorgungseinrichtung 1 wird einer Trocknung 20 unterworfen und sodann in die zweite Gasversorgungseinrichtung 2, also die Luftzerlegungseinrichtung, eingespeist. In der Luftzerlegungseinrichtung werden ein Stickstoffstrom 212 und ein Sauerstoffstrom 213 sowie optional ein Argonstrom 214 gebildet. Flüssigstickstoff und Flüssigsauerstoff 215 und 216 können ebenfalls gebildet und jeweils in entsprechende Speichereinrichtungen 30 und 40 eingespeist werden. Mittels der weiteren Gasversorgungseinrichtung 3 wird neben den Wasserstoffstrom 111b insbesondere ein Kohlenmonoxidstrom 311 gebildet.

In dem in Figur 3B veranschaulichten zweiten Betriebsmodus der Industrieanlage 200 erfolgt insbesondere eine Ausspeicherung von Wasserstoff aus der Wasserstoffspeichereinrichtung 9 und dessen Zuführung zu dem Verbraucher 4. Entsprechender Wasserstoff unterstützt dabei die in geringerem Umfang erfolgende Bildung aufgrund des in geringerer Menge verfügbaren grünen Stroms. Die Stromaufnahme der Gasversorgungseinrichtungen 1, 2, 3 wird minimiert.

Entsprechend erfolgt eine Ausspeicherung von Flüssigstickstoff und Flüssigsauerstoff 215 und 216 aus den entsprechenden Speichereinrichtungen 30 und 40. Bei Bedarf kann der ersten und der zweiten Gasversorgungseinrichtung 102, 103 nicht regenerativ erzeugte elektrische Energie zugeführt werden, wie mit 201a und 201b angegeben.

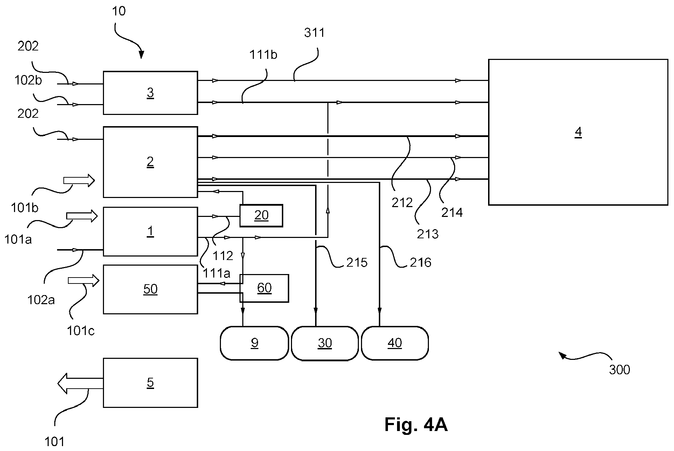

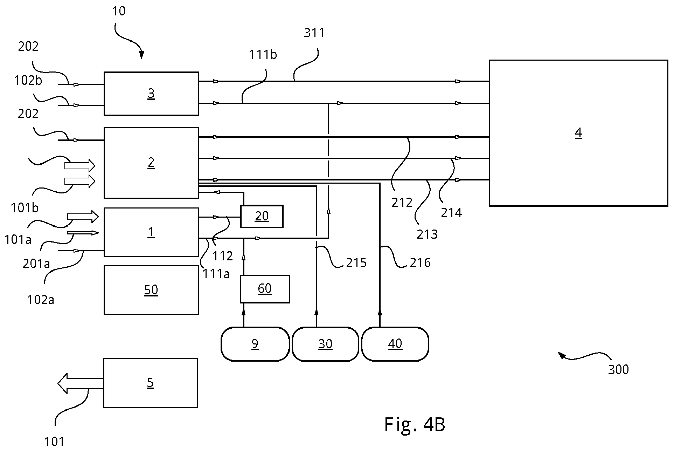

In Figur 4A ist eine Industrieanlage gemäß einer weiteren Ausgestaltung der vorliegenden Erfindung in einem ersten Betriebsmodus veranschaulicht und insgesamt mit 300 bezeichnet. Dieselbe Industrieanlage 300 ist in Figur 4B in einem zweiten Betriebsmodus gezeigt.

Bereits zuvor unter Bezugnahme auf die Industrieanlage 200 gemäß Figur 2 veranschaulichten Komponenten sind hier nicht wiederholt erläutert. Ein wesentlicher Unterschied der Industrieanlage 300 zu der zuvor erläuterten Industrieanlage 200 besteht in der Verwendung einer Wasserstoffverflüssigungseinrichtung 50 Diese kann ebenfalls mit regenerativ erzeugtem elektrischem Strom betrieben werden, wie mit 101c veranschaulicht. In dem ersten Betriebsmodus in der ersten Gasversorgungseinrichtung 1 erzeugter Wasserstoff kann dabei optional durch eine Kältespeichereinheit 60, beispielsweise mit einem Festbettkältespeicher, geführt und anschließend der Verflüssigungseinrichtung 50 zugeführt werden. Auf diese Weise verflüssigter Wasserstoff kann in einer als Flüssigwasserstoffspeicher 9a ausgebildeten Speichereinrichtung eingespeist werden.

Entsprechend ist in dem in Figur 4B dargestellten zweiten Betriebsmodus die Wasserstoffverflüssigungseinrichtung 50 nicht in Betrieb, Wasserstoff wird aus der Flüssigwasserstoffspeichereinrichtung 9a entnommen, unter optionaler Zuhilfenahme der Kältespeichereinheit 60 verdampft, und wie zuvor unterstützend verwendet.

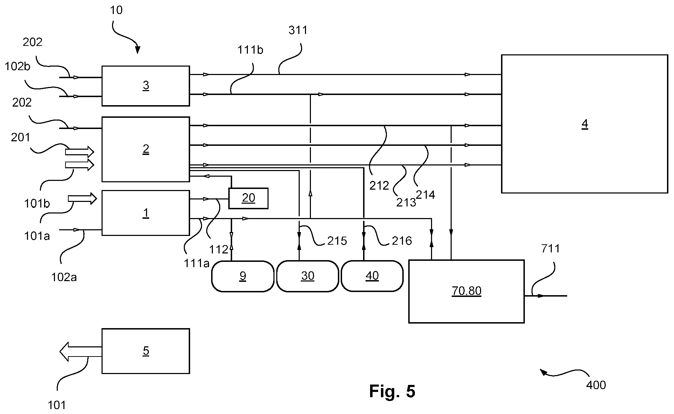

In Figur 5 ist eine Industrieanlage gemäß einer weiteren Ausgestaltung der vorliegenden Erfindung veranschaulicht und insgesamt mit 400 bezeichnet. Die Anlage 400 gemäß Figur 5 unterscheidet sich von den zuvor erläuterten Anlagen insbesondere durch die Verwendung einer zusätzlichen Einrichtung, beispielsweise einer Methanolerzeugungseinrichtung 70 bzw. einer Ammoniakerzeugungseinrichtung 80. In einer entsprechenden zusätzlichen Methanolerzeugungseinrichtung 70 bzw. einer Ammoniakerzeugungseinrichtung 80 kann in Phasen großen Stromangebots zusätzlich ein entsprechendes regenerativ erzeugtes Produkt, beispielsweise "grüner" Ammoniak, wie mit 711 angegeben, bereitgestellt werden. Auf diese Weise kann eine Netzautarkie gewährleistet werden.

In den Figuren 2 bis 5 sind beispielsweise weitere Einsatzströme in den Verbraucher 4 und Produktströme, wie sie in Figur 1 veranschaulicht sind, nicht dargestellt.

## Patentansprüche

1. Verfahren zum Betreiben einer Industrieanlage (100-400) mit einer ersten Gasversorgungseinrichtung (1), die Wasserstoff durch Elektrolyse von Wasser bereitstellt, mit einer oder mit mehreren zweiten Gasversorgungseinrichtungen (2, 3), die ein oder mehrere weitere Gase bereitstellt oder bereitstellen, mit einem oder mit mehreren Verbrauchern (4), der oder die den Wasserstoff und das oder die weiteren Gase zumindest zum Teil verbraucht oder verbrauchen, und mit einer Stromerzeugungseinrichtung (5), die elektrischen Strom aus einer oder mehreren erneuerbaren Energiequellen in einer über die Zeit schwankenden Strommenge erzeugt, **dadurch gekennzeichnet, dass** die erste Gasversorgungseinrichtung (1) und die eine oder die mehreren zweiten Gasversorgungseinrichtungen (2, 3) zu einer Gasversorgungseinheit (10) zusammengefasst sind, die mit zumindest einem Teil des elektrischen Stroms gespeist wird, wobei eine elektrische Leistungsaufnahme der gemeinsamen Gasversorgungseinheit (10) derart an die schwankende Strommenge angepasst wird, dass zu jedem Zeitpunkt wenigstens 50% der Strommenge in der Gasversorgungseinheit (10) verbraucht wird und/oder dass zu jedem Zeitpunkt eine Gesamtstrommenge, die in der gemeinsamen Gasversorgungseinheit verbraucht wird, zu wenigstens 50% den mittels der Stromerzeugungseinrichtung (5) aus der einen oder den mehreren erneuerbaren Energiequellen erzeugten Strom umfasst.

2. Verfahren nach Anspruch 1, bei dem die Leistungsaufnahme der gemeinsamen Gasversorgungseinheit (10) derart an die schwankende Strommenge angepasst wird, dass zu jedem Zeitpunkt wenigstens 66%, wenigstens 75% oder 100% der Strommenge in der Gasversorgungseinheit (10) verbraucht wird.

3. Verfahren nach Anspruch 1 oder 2, bei dem Leistungsaufnahme der gemeinsamen Gasversorgungseinheit (10) durch eine Leistungsregelung und/oder durch Zu- und Abschalten der zweiten Gasversorgungseinrichtung (2, 3) oder wenigstens einer der mehreren zweiten Gasversorgungseinrichtungen (2, 3) an die schwankende Strommenge angepasst wird.

4. Verfahren nach einem der vorstehenden Ansprüche, bei dem eine Luftzerlegungseinrichtung (2) und eine Gasversorgungseinrichtung (3), die unter Einsatz eines kohlenwasserstoffreichen Gases Wasserstoff nichtelektrolytisch bereitstellt, als zweite Gasversorgungseinrichtungen (2, 3) verwendet werden.

5. Verfahren nach Anspruch 4, bei dem als die Gasversorgungseinrichtung (3), die unter Einsatz des kohlenwasserstoffreichen Gases Wasserstoff nichtelektrolytisch bereitstellt, eine Reformiereinrichtung verwendet wird.

6. Verfahren nach Anspruch 4 oder 5, bei dem mittels der ersten Gasversorgungseinrichtung (1) und der Gasversorgungseinrichtung (3), die unter Einsatz des kohlenwasserstoffreichen Gases Wasserstoff nichtelektrolytisch bereitstellt, eine Gesamtmenge an Wasserstoff bereitgestellt wird, zu der die erste Gasversorgungseinrichtung (1) und die Gasversorgungseinrichtung (3), die unter Einsatz des kohlenwasserstoffreichen Gases Wasserstoff nichtelektrolytisch bereitstellt, je nach der verfügbaren Strommenge beiträgt.

7. Verfahren nach Anspruch 6, bei dem der Beitrag der ersten Gasversorgungseinrichtung (1) zu der Gesamtmenge gegenüber dem Beitrag der Gasversorgungseinrichtung (3), die unter Einsatz des kohlenwasserstoffreichen Gases Wasserstoff nichtelektrolytisch bereitstellt, bei einer größeren Strommenge erhöht und bei einer geringeren Strommenge verringert wird.

8. Verfahren nach Anspruch 6 oder 7, bei dem eine Produktionsmenge der Luftzerlegungseinrichtung (2) bei einer größeren Strommenge vergrößert und bei einer geringeren Strommenge verringert wird.

9. Verfahren nach einem der Ansprüche 6 bis 8, bei dem die geringere Strommenge bei 50% bis 90% der größeren Strom menge umfasst.

10. Verfahren nach einem der vorstehenden Ansprüche, bei dem sich die Strommenge um mehr als 1% pro Minute ändert.

11. Verfahren nach einem der vorstehenden Ansprüche, bei dem ferner eine Wasserstoffverflüssigungs- und Speichereinrichtung (6) zum Verflüssigen und flüssigen Speichern von Wasserstoff verwendet wird.

12. Verfahren nach einem der vorstehenden Ansprüche, bei dem eine Methanolerzeugungseinrichtung (7) und/oder eine Ammoniakerzeugungseinrichtung (8) verwendet und je nach der verfügbaren Strommenge betrieben werden..

13. Verfahren nach einem der vorstehenden Ansprüche, bei dem die erste Gasversorgungseinrichtung (1) ferner Sauerstoff durch die Elektrolyse von Wasser bereitstellt, wobei der Sauerstoff zumindest teilweise aufgereinigt und/oder verflüssigt und in dem einen oder den mehreren Verbrauchern (4) verbraucht und/oder aus der Industrieanlage (100-400) ausgeleitet wird.

14. Industrieanlage (100-400) mit einer ersten Gasversorgungseinrichtung (1), die zur Bereitstellung von Wasserstoff durch Elektrolyse von Wasser eingerichtet ist, mit einer oder mit mehreren zweiten Gasversorgungseinrichtungen (2, 3), die zur Bereitstellung eines oder mehrerer weitere Gase eingerichtet ist oder sind, mit einem oder mit mehreren Verbrauchern (4), der oder die zum zumindest teilweisen Verbrauchen des Wasserstoffs und des oder der weiteren Gase eingerichtet ist oder sind, und mit einer Stromerzeugungseinrichtung (5), die zur Erzeugung von elektrischem Strom unter Verwendung einer oder mehrerer erneuerbarer Energiequellen in einer über die Zeit schwankenden Strommenge eingerichtet ist, **dadurch gekennzeichnet, dass** die erste Gasversorgungseinrichtung (1) und die eine oder die mehreren zweiten Gasversorgungseinrichtungen (2, 3) zu einer Gasversorgungseinheit (10) zusammengefasst sind, die mit zumindest einem Teil des Stroms speisbar ist, und dass die Industrieanlage (100-400) dafür eingerichtet ist, eine elektrische Leistungsaufnahme der gemeinsamen Gasversorgungseinheit (10) derart an die schwankende Strommenge anzupassen, dass zu jedem Zeitpunkt wenigstens 50% der Strommenge in der Gasversorgungseinheit (10) verbraucht wird und/oder dass zu jedem Zeitpunkt eine Gesamtstrommenge, die in der gemeinsamen Gasversorgungseinheit verbraucht wird, zu wenigstens 50% den mittels der Stromerzeugungseinrichtung (5) aus der einen oder den mehreren erneuerbaren Energiequellen erzeugten Strom umfasst.

15. Industrieanlage (100-400) nach Anspruch 14, die zur Durchführung eines Verfahrens gemäß einem der Ansprüche 1 bis 13 eingerichtet ist.
